# FASCICULE DE BREVET EUROPEEN

(11) **EP 2 340 634 B1**
(45) Date de publication et mention de la délivrance du brevet: **12.02.2014**
(21) Numéro de dépôt: 09756013.0
(22) Date de dépôt: 13.10.2009
(51) Int. Cl.: H04L 12/18, H04W 36/12, H04W 4/06, H04W 92/02

(54) **Procédé et dispositifs de gestion de transfert d'un flux de données**
Verfahren und Vorrichtungen zur Verwaltung der Übertragung eines Datenstroms
Method and devices for managing transmission of a data flow

(30) Priorité: 15.10.2008 FR 0856982
(43) Date de publication de la demande: 06.07.2011
(73) Titulaire: Orange, 75015 Paris (FR)
(72) Inventeur: SEITE, Pierrick, F-35690 Acigne (FR)
(86) Numéro de dépôt international: PCT/FR2009/051946
(87) Numéro de publication internationale: WO 2010/043810

(56) Documents cités:
- MILOUCHEVA I ET AL: "Multicast Context Transfer in mobile IPv6; draft-miloucheva-mldv2-mip v6-00.txt" IETF STANDARD-WORKING-DRAFT, INTERNET ENGINEERING TASK FORCE, IETF, CH, 8 juin 2005 (2005-06-08), XP015040353 ISSN: 0000-0004
- KWON D H ET AL: "An efficient mobile multicast mechanism for fast handovers: A study from design and implementation in experimental networks" COMPUTER COMMUNICATIONS, ELSEVIER SCIENCE PUBLISHERS BV, AMSTERDAM, NL, vol. 31, no. 10, 25 juin 2008 (2008-06-25) , pages 2162-2177, XP022700471 ISSN: 0140-3664 [extrait le 2008-02-19] cité dans la demande

## Description

### 1. Domaine de l'invention

Le domaine de l'invention est celui des communications numériques.

Plus précisément, l'invention concerne la transmission de flux numériques à destination d'un terminal, et le passage d'un réseau d'accès à un autre lorsque ce terminal se déplace.

L'invention s'applique notamment, mais non exclusivement, à la distribution de flux audiovisuels utilisant le protocole IP (« Internet Protocol »), encore appelée IPTV, sur des terminaux portables de type téléphone, ordinateur, assistant personnel de type PDA (« Personal Digital Assistant »), etc.

### 2. Art antérieur

La distribution de programmes audiovisuels vers des terminaux est généralement réalisée sous la forme de flux de données utilisant le protocole IP.

Ces flux sont diffusés en utilisant une adresse de destination particulière, permettant d'envoyer un programme audiovisuel simultanément à plusieurs destinataires. Pour ce faire, ces destinataires doivent être abonnés à un groupe, appelé groupe de diffusion, désigné par l'adresse de destination particulière. On parle de diffusion « multicast ».

Lorsqu'un terminal abonné à un groupe de diffusion (groupe « multicast ») est connecté à un réseau par l'intermédiaire d'un routeur (encore appelé point d'accès), ce routeur est ajouté à un arbre de diffusion pour ce groupe. De cette façon, le terminal peut recevoir, par l'intermédiaire de ce routeur, les programmes auxquels il est abonné.

Lorsque le terminal change de réseau, il est nécessaire que le routeur d'accès au nouveau réseau soit ajouté à l'arbre de diffusion pour le groupe de diffusion auquel le terminal est abonné. En effet, si l'utilisateur du terminal (ou le terminal par abus de langage) est abonné à un service de type « Orange TV » (marque déposée) par exemple, cet utilisateur doit pouvoir recevoir ce service sur son terminal, quel que soit le réseau auquel le terminal est connecté.

Ce basculement ou « handover » d'un premier réseau à un deuxième réseau peut engendrer une période de latence, le temps que le deuxième réseau soit ajouté à l'arbre de diffusion du groupe de diffusion considéré. Durant cette période, le terminal ne peut pas recevoir les services auxquels il est abonné, ce qui n'est pas admissible.

Le documents « An efficient mobile multicast mechanism for fast handovers: a study from design and implementation in experimental networks » (D.H. Kwon et al., Computer communications, 2008) propose une solution permettant de réduire cette période de latence lors du passage d'un premier réseau vers un deuxième réseau.

Selon ce document, le terminal, qui était précédemment connecté à un premier réseau par l'intermédiaire d'un routeur d'accès PAR, détecte un changement de réseau. Il indique alors au routeur d'accès NAR du nouveau réseau (deuxième réseau) une liste de ses abonnements multicast (groupes de diffusion auxquels le terminal est abonné). A réception de cette liste, le routeur d'accès NAR du deuxième réseau demande à être ajouté aux arbres de diffusion des groupes de diffusion auxquels le terminal est abonné, et demande au routeur d'accès PAR du premier réseau de lui faire suivre les flux multicast correspondants.

Les flux multicast sont alors transmis du routeur d'accès PAR du premier réseau vers le terminal, par l'intermédiaire du routeur d'accès NAR du deuxième réseau.

Une fois que le processus d'abonnement du routeur d'accès NAR du deuxième réseau est terminé, c'est-à-dire une fois que le routeur d'accès NAR du deuxième réseau est ajouté aux arbres de diffusion des groupes auxquels le terminal est abonné, le terminal demande au routeur d'accès PAR du premier réseau d'arrêter de transférer les flux multicast.

Un inconvénient de cette technique est que le terminal doit pouvoir communiquer à la fois avec le routeur de l'ancien réseau auquel il était connecté et avec le routeur du nouveau réseau.

En effet, le terminal doit prendre l'initiative de demander au routeur du nouveau réseau (deuxième routeur) de lui faire suivre les flux multicast auxquels il est abonné, en indiquant à ce deuxième routeur les groupes de diffusion auxquels il est abonné.

De plus, le terminal doit demander au routeur de l'ancien réseau (premier routeur) d'arrêter de lui faire suivre les flux multicast par l'intermédiaire du deuxième routeur.

Or le terminal n'est pas toujours en mesure de communiquer avec les deux réseaux à la fois, notamment lorsque le lien avec le premier routeur est perdu suite à un déplacement physique du terminal.

Le document "Multicast Contex Transfer in mobile IPv6", Miloucheva I. et al, draft-miloucheva- mldv2- mipv6- 00. txt propose un procédé comparable.

Selon ce document, le terminal n'indique pas au routeur du deuxième réseau la liste de ses abbonnements multicast. Cette liste est fournies par le routeur du premier réseau.

De plus, cette solution n'est pas compatible avec le nouveau document RFC 5213 décrivant un nouveau protocole « Proxy Mobile Internet Protocol version 6 » (PMIPv6), spécifié en août 2008 par l'IETF (en anglais « Internet Engineering Task Force », en français « Détachement d'ingénierie d'Internet »), le terminal étant actif dans le processus de « handover ». En effet, une des contraintes imposées dans ce document est que le processus de « handover » soit entièrement transparent pour le terminal (en anglais, on parle de « seamless mobility »).

### 3. Exposé de l'invention

L'invention propose une solution nouvelle qui ne présente pas l'ensemble de ces inconvénients de l'art antérieur, sous la forme d'un procédé de gestion d'un transfert d'un flux de données reçu par un terminal mobile d'un premier réseau vers un deuxième réseau. On considère que le terminal est connecté au premier réseau par l'intermédiaire d'un routeur d'accès au premier réseau, dit premier routeur, et est abonné à au moins un groupe de diffusion recevant le flux de données.

Selon l'invention, un tel procédé met en oeuvre les étapes suivantes :
- détection, par un routeur d'accès au deuxième réseau, dit deuxième routeur, d'une arrivée ou présence du terminal dans le deuxième réseau ;
- demande de lecture, par le deuxième routeur, d'informations relatives à au moins un groupe de diffusion auquel le terminal est abonné dans une table d'abonnement ;
- réception du flux de données par le deuxième routeur, à partir des informations lues, et re-transmission au terminal.

L'invention propose ainsi une solution nouvelle et inventive pour la gestion d'un «handover» entre différents réseaux d'accès, appartenant notamment à un même opérateur. Par exemple, ces réseaux sont des réseaux cellulaires de troisième génération (de type GSM ou UMTS par exemple), des réseaux à points d'accès radio de type WiFi, des réseaux domestiques, etc.

Plus précisément, on entend par « réseau » un groupe logique de noeuds connectés entre eux. Dans les réseaux de type IP notamment, les différents noeuds d'un même réseau partagent un masque réseau commun (en IPv4) ou un préfixe réseau (en IPv6).

Ainsi, le « handover » entre différents réseaux d'accès s'entend aussi bien comme :
- le passage d'un premier point d'accès vers un deuxième point d'accès, au sein d'un même réseau (réseau GSM par exemple) ; ou
- le passage d'un réseau utilisant une première technologie (réseau WiFi à l'intérieur d'un bâtiment par exemple) vers un autre réseau utilisant cette même technologie (réseau WiFi à l'intérieur d'un autre bâtiment par exemple) ; ou
- le passage d'un réseau utilisant une première technologie (réseau GSM par exemple) vers un réseau utilisant une deuxième technologie, distincte de la première technologie (réseau WiFi par exemple).

En effet, selon la solution proposée, le terminal n'a aucune action spécifique à effectuer lorsqu'il passe d'un réseau à un autre, i.e. lorsqu'il change de point d'accès ou d'attachement (routeur). Le changement de réseau est donc transparent pour le terminal. La solution proposée est donc compatible avec le protocole « Proxy Mobile Internet Protocol version 6 ».

Plus précisément, c'est le deuxième routeur, i.e. le nouveau point d'accès, qui détecte l'arrivée ou la présence du terminal dans sa zone de couverture. Du fait de la présence d'une table d'abonnement, le terminal n'a pas, selon l'invention, à transmettre au deuxième routeur la liste de ses abonnements.

On note que cette table d'abonnement peut être lue par différentes entités. Elle peut être lue par le deuxième routeur lui-même, ou par le premier routeur qui transmet ensuite les informations utiles au deuxième routeur, ou encore par un routeur commun aux deux réseaux. Une telle table indique, pour le terminal au moins, un ou plusieurs groupes de diffusion au(x)quel(s) il est abonné. Elle établit ainsi une relation entre un terminal et ses groupes de diffusion. Elle peut être mise à jour périodiquement et/ou en fonction d'une modification des abonnements du terminal. Il est ainsi possible d'indiquer en temps réel le(s) groupe(s) de diffusion au(x)quel(s) est abonné un terminal.

De cette façon, dès que le deuxième routeur détecte la présence du terminal dans le deuxième réseau, il peut obtenir des informations relatives au(x) groupe(s) de diffusion au(x)quel(s) le terminal est abonné, et commencer la procédure de « handover », sans attendre de recevoir des instructions de la part du terminal.

Selon un aspect particulier, le procédé de gestion comprend une étape d'ajout du deuxième routeur à un arbre de diffusion pour le groupe de diffusion recevant ledit flux de données. L'étape de réception est alors mise en oeuvre tant que le deuxième routeur n'appartient pas à l'arbre de diffusion.

En d'autres termes, le deuxième routeur reçoit le flux de données d'une autre entité (premier routeur, routeur commun) et le transfère au terminal, tant que le processus d'abonnement du deuxième routeur n'est pas terminé, c'est-à-dire tant que le deuxième routeur n'est pas ajouté à l'arbre de diffusion du groupe de diffusion recevant le flux auquel le terminal est abonné. Une fois ce processus d'abonnement terminé, le deuxième routeur peut continuer la transmission du flux vers le terminal, sans avoir à recevoir ce flux d'une autre entité.

Une fois encore, le terminal n'a pas à intervenir pour que le premier routeur arrête de lui transférer les flux multicast par l'intermédiaire du deuxième routeur. C'est la fin de la procédure d'abonnement du deuxième routeur qui déclenche l'arrêt de cette retransmission.

Ces opérations sont donc transparentes pour le terminal.

Elles répondent également au problème de latence, puisque le terminal reçoit sans interruption le flux, qu'il provienne directement du deuxième routeur après la procédure d'abonnement ou d'une autre entité.

Selon un premier mode de réalisation, la table d'abonnement indique, pour un terminal, tous les groupes de diffusion auxquels le terminal est abonné, et la lecture est mise en oeuvre par le deuxième routeur.

On considère, selon ce premier mode de réalisation, une table d'abonnement unique, qui peut être lue par n'importe quelle entité du premier ou deuxième réseau.

Cette table d'abonnement est mise à jour périodiquement et/ou en fonction d'une modification des abonnements du terminal, par le routeur d'accès auquel est connecté le terminal.

De cette façon, le deuxième routeur peut obtenir très rapidement des informations relatives au(x) groupe(s) de diffusion au(x)quel(s) le terminal est abonné, en lisant directement cette table d'abonnement.

En particulier, selon ce premier mode de réalisation, le deuxième routeur émet une requête de transmission du flux de données à destination d'un routeur commun aux premier et deuxième réseaux, et reçoit le flux de données en provenance du routeur commun.

Ainsi, une fois ces informations obtenues, le deuxième routeur demande au routeur commun de lui transférer les flux multicast qu'il ne reçoit pas (i.e. pour lesquels il n'est pas encore abonné).

De cette façon, le terminal reçoit sans interruption les flux multicast auxquels il est abonné, même lors d'un changement de réseau. Les problèmes de latence sont donc résolus, et le changement de réseau est invisible pour le terminal.

Par exemple, le routeur commun est une ancre de mobilité, encore appelée LMA pour « Local Mobile Anchor », selon la terminologie PMIPv6. Par définition, une telle ancre de mobilité connaît, à chaque instant, la localisation des terminaux mobiles dans les différents réseaux, et re-route le trafic qui leur est destiné en fonction de cette localisation.

On ajoute par exemple un module multicast à l'ancre de mobilité, permettant, lors d'une mobilité d'un terminal, de faire suivre temporairement les flux multicast au terminal.

Selon un deuxième mode de réalisation, la table d'abonnement est associée au premier routeur et indique, pour un terminal connecté au premier réseau, tous les groupes de diffusion auxquels le terminal est abonné. Dans ce cas, la lecture est mise en oeuvre par le premier routeur.

En d'autres termes, le premier routeur maintient à jour sa propre table des abonnements multicast pour les terminaux qui lui sont connectés. Comme le terminal était précédemment connecté au premier réseau, le premier routeur connaît le(s) groupes de diffusion au(x)quel(s) est abonné le terminal.

Le deuxième routeur interroge donc le premier routeur pour connaître le(s) groupes de diffusion au(x)quel(s) est abonné le terminal qui est maintenant connecté au deuxième réseau.

En particulier, selon ce deuxième mode de réalisation, le deuxième routeur émet une requête de transmission du flux de données à destination du premier routeur et reçoit le flux de données en provenance du premier routeur.

On évite ainsi un engorgement au niveau du routeur commun, puisque les flux multicast sont transmis temporairement du premier routeur vers le deuxième routeur, le temps que le processus d'abonnement de ce dernier se termine.

En particulier, une deuxième table d'abonnement peut être associée au deuxième routeur, cette deuxième table d'abonnement indiquant, pour un terminal connecté au deuxième réseau, tous les groupes de diffusion auxquels le terminal est abonné.

Ainsi, chaque routeur tient à jour sa propre table d'abonnement, indiquant les abonnements multicast pour les terminaux qui lui sont connectés. De nouveau, ceci permet un transfert rapide du flux de données en cas de handover.

Dans un autre mode de réalisation, l'invention concerne un programme d'ordinateur comprenant des instructions de code de programme pour la mise en oeuvre du procédé de gestion décrit précédemment, lorsqu'il est exécuté par un processeur. Par exemple, un tel programme est téléchargeable depuis un réseau de communication et/ou stocké sur un support lisible par ordinateur et/ou exécutable par un processeur.

Un autre aspect de l'invention concerne un système de gestion d'un transfert d'un flux de données reçu par un terminal mobile d'un premier réseau vers un deuxième réseau,
le système comprenant :
- un routeur d'accès au premier réseau, dit premier routeur ;
- un routeur d'accès au deuxième réseau, dit deuxième routeur ;
le terminal étant abonné à au moins un groupe de diffusion recevant ledit flux de données, et étant connecté au premier réseau par l'intermédiaire du premier routeur.

Selon l'invention, le deuxième routeur comprend :
- des moyens de détection d'une arrivée du terminal dans le deuxième réseau ;
- des moyens de demande de lecture d'informations relatives à au moins un groupe de diffusion auquel le terminal est abonné dans une table d'abonnement ; et
- des moyens de réception du flux de données à partir des informations lues, et de re-transmission au terminal.

Un tel système est notamment adapté à mettre en oeuvre le procédé de gestion décrit précédemment.

En particulier, un tel système comprend également un routeur commun aux premier et au deuxième réseau. Par exemple, le routeur commun du réseau de diffusion multicast est une ancre de mobilité (« Local Mobility Anchor » ou LMA), et les premier et deuxième routeurs sont des passerelles d'accès mobile (« Mobile Access Gateway » ou MAG).

Une ou plusieurs entités du système (par exemple le premier et/ou le deuxième routeur) comprennent également des moyens de lecture de la (ou des) table(s) d'abonnement.

L'invention concerne également un routeur d'accès à un deuxième réseau, apte à recevoir un flux de données transféré d'un premier réseau, un terminal étant abonné à au moins un groupe de diffusion recevant le flux de données, et étant connecté au premier réseau par l'intermédiaire d'un routeur d'accès au premier réseau, dit premier routeur.

Selon l'invention, le routeur d'accès au deuxième réseau comprend :
- des moyens de détection d'une arrivée du terminal dans le deuxième réseau ;
- des moyens de demande de lecture d'informations relatives à au moins un groupe de diffusion auquel le terminal est abonné dans une table d'abonnement ; et
- des moyens de réception du flux de données à partir des informations lues et de re-transmission au terminal.

Un tel routeur appartient par exemple à un système tel que décrit précédemment. Il s'agit par exemple d'une passerelle d'accès mobile.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes du procédé de gestion d'un transfert d'un flux de données selon un mode de réalisation de l'invention ;
- la figure 2 illustre un premier mode de réalisation de l'invention dans un système mettant en oeuvre une architecture PMIP ;
- la figure 3 illustre un deuxième mode de réalisation de l'invention dans un système mettant en oeuvre une architecture PMIP ;
- la figure 4 présente un exemple de structure d'un routeur d'accès mettant en oeuvre une technique de gestion d'un transfert de flux selon un des modes de réalisation de l'invention.

### 5. Description d'un mode de réalisation de l'invention

Le principe général de l'invention repose sur l'utilisation d'une table d'abonnement permettant, grâce aux informations qu'elle contient, d'assurer la réception de flux de données dits « multicast » par un terminal en cas de mobilité de ce terminal, et notamment de changement de réseau. De tels flux multicast sont diffusés à destination d'au moins un groupe de diffusion auquel le terminal est abonné. On rappelle qu'on entend par « réseau », notamment de type IP, un ensemble de noeuds dans un même espace d'adressage IP homogène.

Plus précisément, une telle table d'abonnement associe, à un terminal au moins, un ou plusieurs groupe(s) de diffusion au(x)quel(s) le terminal est abonné. Ainsi, une telle table d'abonnement comprend, pour un ou plusieurs terminaux :
- l'identifiant du terminal et/ou ou de l'utilisateur ;
- une ou plusieurs adresses de destination liée(s) à cet identifiant, désignant le ou les groupe(s) de diffusion au(x)quel(s) le terminal ou l'utilisateur est abonné.

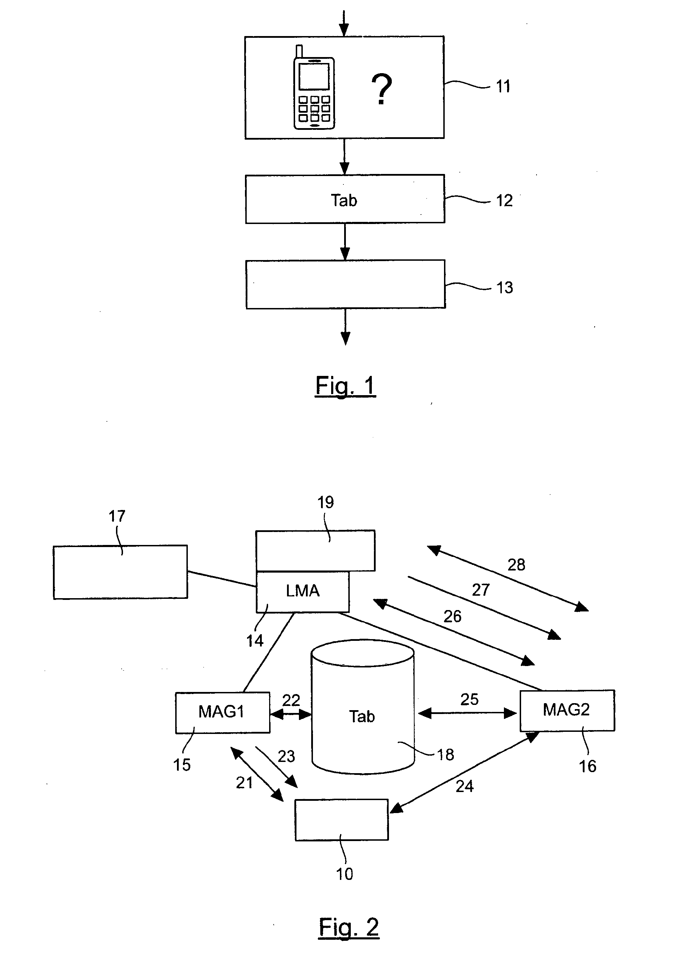

On présente ci-après, en relation avec la figure 1, les principales étapes du procédé de gestion d'un transfert d'un flux de données selon un mode de réalisation de l'invention. On note qu'un tel procédé peut être mis en oeuvre de diverses manières, notamment sous forme câblée ou sous forme logicielle.

On considère un terminal mobile d'un premier réseau vers un deuxième réseau, c'est-à-dire, par exemple, d'un premier point d'accès (premier routeur) vers un deuxième point d'accès (deuxième routeur), au sein d'un même réseau WiFi.

Ce terminal est connecté au premier réseau par l'intermédiaire d'un routeur d'accès au premier réseau, dit premier routeur, et est abonné à au moins un groupe de diffusion recevant le flux de données. Dans un premier temps, le terminal reçoit donc le flux de données (flux multicast) par l'intermédiaire du premier routeur.

En cas de mobilité du terminal du premier réseau vers un deuxième réseau, le routeur d'accès au deuxième réseau, dit deuxième routeur, détecte au cours d'une étape de détection 11 l'arrivée (ou la présence) du terminal dans le deuxième réseau. Cette détection intervient lorsque le terminal s'attache, de manière classique, au deuxième routeur. Par exemple, cette détection intervient lorsque le routeur d'accès reçoit une requête d'authentification émise par le terminal (comprenant l'identifiant du terminal et éventuellement la preuve de son identité (certificat, clé, mot de passe, etc)).

Ainsi, le terminal n'a pas à signaler lui-même un changement de réseau.

Afin d'assurer la réception du flux de données lorsque le terminal est connecté au deuxième réseau, une table d'abonnement Tab est lue par une entité du premier ou du deuxième réseau. Le deuxième routeur peut alors obtenir, au cours d'une étape d'obtention 12, des informations relatives à au moins un groupe de diffusion auquel le terminal est abonné.

En particulier, le deuxième routeur peut obtenir des informations relatives au groupe de diffusion qui permet de recevoir le flux de données. De cette façon, le deuxième routeur peut recevoir le flux de données au cours d'une étape suivante de réception 13, et le re-transmettre au terminal.

Lors du changement de réseau, le terminal reçoit donc toujours le flux de données multicast, et n'a pas à accomplir d'action spécifique pour l'abonnement du deuxième routeur. La gestion de la mobilité du terminal ne repose donc pas sur le terminal.

Ainsi, la solution proposée est compatible avec le protocole PMIPv6 spécifié en août 2008 par l' IETF.

On note également que si le flux multicast correspond à un service payant (par exemple « Orange Sports » - marque déposée), une étape supplémentaire de contrôle est nécessaire, afin de n'autoriser la diffusion du flux multicast qu'aux utilisateurs abonnés. De plus, ces utilisateurs abonnés doivent pouvoir recevoir ce flux multicast, quelque soit le terminal qu'ils utilisent.

Dans ce cas, la table d'abonnement peut comprendre l'identifiant de l'utilisateur, et une ou plusieurs adresses de destination liée(s) à cet identifiant.

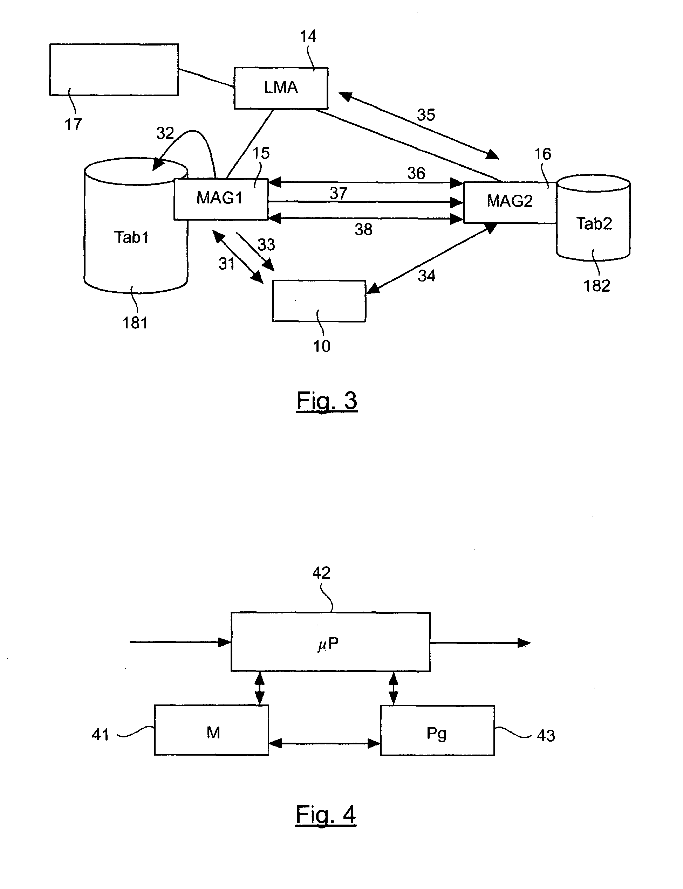

On décrit ci-après en relation avec les figures 2 et 3 deux modes de réalisation de l'invention, mis en oeuvre dans le domaine des services de télévision numérique sur IP (IPTV) par exemple.

On considère par exemple un système mettant en oeuvre une architecture PMIP selon laquelle un routeur 14 d'accès à un réseau de diffusion multicast, également noté LMA, fait office d'ancre de mobilité.

Ce routeur LMA 14 est commun à plusieurs réseaux. En d'autres termes, ce routeur LMA 14 communique avec un routeur 15 d'accès à un premier réseau, dit premier routeur ou passerelle d'accès mobile MAG1, et avec un routeur 16 d'accès à un deuxième réseau, dit deuxième routeur ou passerelle d'accès mobile MAG2. Ces premier et deuxième réseaux correspondent par exemple à deux points d'accès au sein d'un même réseau WiFi, ou à deux réseaux locaux WiFi distincts, ou à un réseau cellulaire de type UMTS et un réseau WiFi . Le routeur LMA 14 communique également avec un correspondant ou source multicast 17.

Le routeur LMA 14 connaît à chaque instant la localisation des terminaux dans le réseau de diffusion multicast et re-route en fonction de cette localisation le trafic qui est destiné à ces terminaux. Selon le processus PMIP, la localisation d'un terminal est indiquée au routeur LMA 14 par le routeur d'accès (MAG1 15 ou MAG2 16) auquel se connecte le terminal.

Dans le cas du transport de flux multicast, la mobilité IP du terminal du premier réseau vers le deuxième réseau nécessite que le nouveau point d'accès (deuxième routeur MAG2 16) rejoigne l'arbre de diffusion multicast, si l'on suppose que les flux multicast ne sont pas déjà diffusés sur le deuxième routeur MAG2 16.

On décrit ci-après un premier mode de réalisation, illustré en figure 2, selon lequel on ajoute à l'architecture PMIP classique une table d'abonnement Tab 18 et un module multicast 19.

La table d'abonnement 18 peut être associée à n'importe quelle entité du premier ou du deuxième réseau. Par exemple, elle est associée au routeur commun LMA 14. Elle peut être lue par le premier routeur MAG1 15 et par le deuxième routeur MAG2 16.

Selon ce premier mode de réalisation, cette table d'abonnement est unique, et connaît l'ensemble des groupes de diffusion auxquels est abonné un terminal. Par exemple, cette table d'abonnement est gérée par un opérateur, comme Orange (marque déposée), qui met à jour cette table périodiquement, ou à chaque fois qu'un terminal modifie ses abonnements (nouvel abonnement ou désabonnement). Selon un mode de réalisation particulier, cette table d'abonnement permet d'associer à chaque terminal présent dans le réseau de diffusion multicast, l'ensemble des groupes de diffusion auquel il est connecté.

Le module multicast 19 est quant à lui associé au routeur commun LMA 14. Ce module permet, lors d'une mobilité d'un terminal, de faire suivre temporairement les flux multicast à ce terminal.

Selon ce premier mode de réalisation, lorsqu'un terminal passe du premier réseau vers le deuxième réseau, il est possible de faire transiter les flux multicast du routeur commun LMA 14 vers le deuxième routeur MAG2 16 le temps que le deuxième routeur MAG2 16 se réabonne, à la place du terminal, aux groupes de diffusion désirés, et qu'ainsi le deuxième routeur MAG2 16 rejoigne l'arbre de diffusion pour les groupes de diffusion de ce terminal.

Pour ce faire, le deuxième routeur MAG2 16 consulte la table d'abonnement 18, qui lui permet de connaître les groupes de diffusion auxquels le terminal est abonné.

On décrit plus précisément en relation avec la figure 2 les principales étapes mises en oeuvre selon ce premier mode de réalisation.

On considère par exemple que le terminal 10 est connecté au premier réseau par l'intermédiaire du premier routeur d'accès MAG1 15.

Au cours d'une étape 21, le terminal 10 s'abonne à un nouveau groupe de diffusion (groupe multicast), par exemple au groupe « Orange Sports » (marque déposée).

Au cours d'une étape 22 suivante, le premier routeur d'accès MAG1 15, qui reçoit la requête d'abonnement au groupe « Orange Sports » (marque déposée), met à jour la table d'abonnement 18 pour le terminal 10.

Au cours d'une étape 23 suivante, conformément aux mécanismes IP multicast classiques, le premier routeur d'accès MAG1 15 joint l'arbre de diffusion multicast pour ce groupe et transfère le flux multicast correspondant sur le lien du terminal.

Au cours d'une étape 24, le terminal effectue une mobilité. En d'autres termes, il s'attache à un nouveau point d'accès, dit deuxième routeur MAG2 16, de façon classique (attachement IP classique). Ce nouveau point d'accès peut permettre d'accéder à un réseau de même type que le premier réseau (réseau local sans fil WLAN par exemple) lors d'un changement de localisation du terminal 10.

Au cours d'une étape 25 suivante, le deuxième routeur MAG2 16 va lire dans la table d'abonnement 18 les groupes de diffusion auxquels est abonné le terminal 10. Il apprend ainsi que le terminal 10 est abonné au groupe « Orange Sports » (marque déposée).

Au cours d'une étape 26 suivante, le deuxième routeur MAG2 16 notifie au routeur commun LMA 14 l'attachement du terminal à ce routeur MAG2 (selon un processus PMIP classique), et demande au routeur commun LMA 14 de lui faire suivre les flux multicast qu'il ne reçoit pas.

En parallèle, le deuxième routeur MAG2 16 initie la mise à jour du routage multicast pour ces flux multicast. En d'autres termes, le deuxième routeur d'accès MAG2 16 entame le processus d'abonnement pour rejoindre l'arbre de diffusion multicast.

Au cours d'une étape 27 suivante, le routeur commun LMA 14 fait suivre au deuxième routeur MAG2 16 les flux multicast demandés. On note que, selon ce premier mode de réalisation, le routeur commun LMA 14 doit être lui-même abonné à tous les groupes de diffusion susceptibles d'être demandés par chacun des terminaux présents dans le réseau de diffusion multicast.

Lorsque le deuxième routeur MAG2 16 a finalement rejoint l'arbre de diffusion multicast, le routage multicast est mis à jour, au cours d'une étape 28 suivante. Le deuxième routeur d'accès MAG2 16 demande donc au routeur commun LMA 14 d'arrêter le transfert de données.

En d'autres termes, pendant la procédure de transfert du premier réseau au deuxième réseau, le deuxième routeur MAG2 16 reçoit un match de football diffusé aux abonnés du service « Orange Sports » (marque déposée) du routeur commun LMA 14, tant que le deuxième routeur MAG2 16 n'appartient pas à l'arbre de diffusion associé à ce service. Une fois la procédure d'abonnement du deuxième routeur MAG2 16 achevée, c'est-à-dire une fois que le deuxième routeur MAG2 16 appartient à l'arbre de diffusion associé à ce service, le flux ne transite plus par le routeur commun LMA 14.

Ainsi, conformément à la spécification PMIP, le terminal n'est pas impliqué dans le mécanisme de gestion de la mobilité. De plus, grâce à l'utilisation d'une table d'abonnement, le flux multicast transite du routeur commun LMA 14 vers le deuxième routeur MAG2 16, le temps que le deuxième routeur MAG2 16 rejoigne l'arbre de diffusion, ce qui permet d'éviter les problèmes de latence rencontrés selon les techniques de l'art antérieur.

On décrit ci-après un deuxième mode de réalisation, illustré en figure 3, selon lequel on ajoute à l'architecture PMIP classique plusieurs tables d'abonnement.

Par exemple, une table d'abonnement est associée à chaque routeur d'accès :
- une première table d'abonnement Tab1 181 est associée au premier routeur MAG 1 15 ;
- une deuxième table d'abonnement Tab2 182 est associée au deuxième routeur MAG2 16.

Selon ce deuxième mode de réalisation, la table d'abonnement associée à un routeur indique, pour le ou les terminaux connectés au réseau correspondant, le ou les groupes de diffusion auxquels ils sont abonnés. Par exemple, ces tables sont mises à jour individuellement, et périodiquement ou à chaque fois qu'un terminal modifie ses abonnements (nouvel abonnement ou désabonnement) au sein du réseau correspondant. Ainsi, chaque routeur d'accès (MAG1 15 et MAG2 16) maintient à jour sa propre table d'abonnement pour les terminaux qui lui sont connectés. Selon un mode de réalisation particulier, la table d'abonnement associée à un routeur d'accès contient autant d'entrées que de terminaux qui sont attachés au routeur d'accès, chaque entrée de la table d'abonnement comprenant la liste des abonnements pour le terminal correspondant à cette entrée. Autrement dit, chaque routeur d'accès gère les abonnements multicast pour les terminaux qui lui sont attachés.

L'invention propose ainsi, selon ce deuxième mode de réalisation, de distribuer une table d'abonnement dans chaque routeur d'accès.

Selon ce deuxième mode de réalisation, lorsqu'un terminal passe du premier réseau vers le deuxième réseau, il est possible de faire transiter les flux multicast du premier routeur MAG1 15 vers le deuxième routeur MAG2 16 le temps que le deuxième routeur MAG2 16 se réabonne, à la place du terminal, aux groupes de diffusion désirés, et qu'ainsi le deuxième routeur MAG2 16 rejoigne l'arbre de diffusion multicast pour les groupes de diffusion de ce terminal.

Pour ce faire, le deuxième routeur MAG2 16 demande au premier routeur MAG1 15 de consulter la table d'abonnement Tab1 181 qui lui est associée, et de lui transmettre les informations relatives au(x) groupe(s) de diffusion au(x)quel(s) est abonné le terminal dans le premier réseau.

On décrit plus précisément en relation avec la figure 3 les principales étapes mises en oeuvre selon ce deuxième mode de réalisation.

On considère par exemple que le terminal 10 est connecté au premier réseau par l'intermédiaire du premier routeur d'accès MAG1 15.

Au cours d'une étape 31, le terminal 10 s'abonne à un nouveau groupe de diffusion (groupe multicast), par exemple au groupe « Orange Sports » (marque déposée).

Au cours d'une étape 32 suivante, le premier routeur d'accès MAG1 15, qui reçoit la requête d'abonnement au groupe « Orange Sports » (marque déposée), met à jour sa table d'abonnement 181 pour le terminal 10.

Au cours d'une étape 33 suivante, conformément aux mécanismes IP multicast classiques, le premier routeur d'accès MAG1 15 rejoint l'arbre de diffusion multicast pour ce groupe et transfère le flux multicast correspondant sur le lien du terminal.

Au cours d'une étape 34, le terminal effectue une mobilité. En d'autres termes, il s'attache à un nouveau point d'accès, dit deuxième routeur MAG2 16, de façon classique (attachement IP classique). Ce nouveau point d'accès peut permettre d'accéder à un réseau de même type que le premier réseau (réseau local sans fil WLAN par exemple) lors d'un changement de localisation du terminal 10.

Au cours d'une étape 35 suivante, le deuxième routeur MAG2 16 notifie au routeur commun LMA 14 l'attachement du terminal à ce routeur MAG2 (selon un processus PMIP classique), et demande au routeur commun LMA 14 de lui transmettre l'ancienne localisation du terminal. Le deuxième routeur MAG2 16 apprend ainsi que le terminal était précédemment connecté au premier routeur MAG1 15, et récupère l'adresse de ce routeur MAG1.

Au cours d'une étape 36 suivante, le deuxième routeur MAG2 16 interroge le premier routeur MAG1 15, dont il connaît l'adresse, pour connaître les groupes de diffusion auxquels le terminal est abonné. Le premier routeur MAG1 15 lit la table d'abonnement Tabl 181 qui lui est associée, et transmet ces informations au deuxième routeur MAG2 16.

Le deuxième routeur MAG2 16 initie alors la mise à jour du routage multicast pour ces flux multicast. En d'autres termes, le deuxième routeur MAG2 16 entame le processus d'abonnement pour rejoindre l'arbre de diffusion multicast.

Le temps que le deuxième routeur MAG2 16 rejoigne l'arbre de diffusion multicast, le premier routeur MAG1 15 reste connecté à l'arbre de diffusion et transfère au deuxième routeur MAG2 16 les flux multicast demandés par le terminal, au cours d'une étape 37.

Lorsque le deuxième routeur MAG2 16 a finalement rejoint l'arbre de diffusion, le routage multicast est mis à jour, au cours d'une étape 38 suivante. Le deuxième routeur d'accès MAG2 16 demande donc au premier routeur MAG1 15 d'arrêter le transfert de données.

En d'autres termes, pendant la procédure de transfert du premier réseau au deuxième réseau, le deuxième routeur MAG2 16 reçoit un match de football diffusé aux abonnés du service « Orange Sports » (marque déposée) du premier routeur MAG1 15, tant que le deuxième routeur MAG2 16 n'appartient pas à l'arbre de diffusion associé à ce service. Une fois la procédure d'abonnement du deuxième routeur MAG2 16 achevée, c'est-à-dire une fois que le deuxième routeur MAG2 16 appartient à l'arbre de diffusion associé à ce service, le deuxième routeur MAG2 16 demande au premier routeur MAG1 15 d'arrêter le transfert du flux, et le flux ne transite plus par le premier routeur MAG1 15.Le premier routeur MAG1 15 peut ensuite quitter le ou les arbres de diffusion correspondant à des groupes de diffusion pour lesquels il n'a plus de terminal dans son réseau. Par exemple, si aucun des terminaux présents dans le premier réseau n'est abonné au service « Orange Sports », le premier routeur MAG1 15 peut se désinscrire de l'arbre de diffusion correspondant, une fois que le deuxième routeur MAG2 16 a rejoint cet arbre de diffusion.

De nouveau, conformément à la spécification PMIP, le terminal n'est pas impliqué dans le mécanisme de gestion de la mobilité. De plus, grâce à l'utilisation de tables d'abonnement, le flux multicast transite du premier routeur MAG1 15 vers le deuxième routeur MAG2 16, le temps que le deuxième routeur MAG2 16 rejoigne l'arbre de diffusion, ce qui permet d'éviter les problèmes de latence rencontrés selon les techniques de l'art antérieur.

En particulier, ce deuxième mode de réalisation présente un intérêt notamment lorsque le nombre de terminaux et/ou de groupes de diffusion est important.

En effet, plutôt que d'avoir une unique table d'abonnement comprenant l'ensemble des terminaux et les groupes de diffusion associés à chacun de ces terminaux (qui devient volumineuse lorsque le nombre de terminaux et/ou de groupes de diffusion est important), on utilise une table par réseau, chaque table indiquant les groupes de diffusion auxquels un terminal est abonné dans le réseau correspondant.

On présente finalement, en relation avec la figure 4, un exemple de structure simplifiée d'un routeur d'accès à un deuxième réseau mettant en oeuvre une technique de gestion de transfert de flux selon un des modes de réalisation décrit ci-dessus.

Un tel routeur d'accès, dit deuxième routeur, comprend une mémoire 41 comprenant une mémoire tampon, une unité de traitement 42, équipée par exemple d'un microprocesseur µP, et pilotée par le programme d'ordinateur 43, mettant en oeuvre le procédé de gestion d'un transfert de flux selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 détecte l'attachement d'un nouveau terminal au deuxième routeur. Le microprocesseur de l'unité de traitement 42 met en oeuvre les étapes du procédé de gestion décrit précédemment, selon les instructions du programme d'ordinateur 43, pour transférer un flux de données reçu par le terminal attaché à un premier réseau vers ce deuxième réseau. Pour cela, le deuxième routeur comprend, outre la mémoire tampon 41, des moyens de détection d'une arrivée du terminal dans le deuxième réseau, des moyens d'obtention d'informations relatives à au moins un groupe de diffusion auquel le terminal est abonné et des moyens de réception du flux de données à partir des informations obtenues, et de re-transmission au terminal. Ces moyens sont pilotés par le microprocesseur de l'unité de traitement 42.

## Revendications

1. Procédé de gestion d'un transfert d'un flux de données reçu par un terminal mobile d'un premier réseau vers un deuxième réseau,
ledit terminal étant abonné à au moins un groupe de diffusion recevant ledit flux de données, et étant connecté audit premier réseau par l'intermédiaire d'un routeur d'accès au premier réseau, dit premier routeur (15),
**caractérisé en ce que** ledit procédé est mis en oeuvre par un routeur d'accès au deuxième réseau, dit deuxième routeur (16), et met en oeuvre les étapes suivantes :
- détection (11) d'une arrivée dudit terminal dans ledit deuxième réseau ;
- demande de lecture (12) dans une table d'abonnement (18, 181), d'informations relatives à au moins un groupe de diffusion auquel ledit terminal est abonné ;
- réception (13) dudit flux de données, à partir desdites informations lues, et re-transmission audit terminal.

2. Procédé de gestion selon la revendication 1, **caractérisé en ce qu'**il comprend une étape d'ajout dudit deuxième routeur (16) à un arbre de diffusion pour le groupe de diffusion recevant ledit flux de données, et **en ce que** ladite étape de réception (13) est mise en oeuvre tant que ledit deuxième routeur (16) n'appartient pas audit arbre de diffusion.

3. Procédé de gestion selon la revendication 1, **caractérisé en ce que** ladite table d'abonnement indique, pour un terminal, tous les groupes de diffusion auquel ledit terminal est abonné, et **en ce que** ladite lecture est mise en oeuvre par ledit deuxième routeur (16).

4. Procédé de gestion selon la revendication 3, caractérisé en ce ledit deuxième routeur (16) émet une requête de transmission dudit flux de données à destination d'un routeur commun auxdits premier et deuxième réseaux, et reçoit ledit flux de données en provenance dudit routeur commun.

5. Procédé de gestion selon la revendication 1, **caractérisé en ce que** ladite table d'abonnement est associée audit premier routeur (15) et indique, pour un terminal connecté audit premier réseau, tous les groupes de diffusion auquel ledit terminal est abonné,
et **en ce que** ladite lecture est mise en oeuvre par ledit premier routeur (15).

6. Procédé de gestion selon la revendication 5, **caractérisé en ce que** ledit deuxième routeur (16) émet une requête de transmission dudit flux de données à destination dudit premier routeur (15) et reçoit ledit flux de données en provenance dudit premier routeur (15).

7. Procédé de gestion selon la revendication 5, **caractérisé en ce qu'**une table d'abonnement est également associée audit deuxième routeur (16), ladite table d'abonnement indiquant, pour un terminal connecté audit deuxième réseau, tous les groupes de diffusion auquel ledit terminal est abonné.

8. Procédé de gestion selon la revendication 1, **caractérisé en ce que** ladite table d'abonnement est mise à jour périodiquement et/ou en fonction d'une modification des abonnements dudit terminal.

9. Système de gestion d'un transfert d'un flux de données reçu par un terminal mobile d'un premier réseau vers un deuxième réseau,
ledit système comprenant :
- un routeur d'accès audit premier réseau, dit premier routeur (15) ;
- un routeur d'accès audit deuxième réseau, dit deuxième routeur (16) ;
ledit terminal étant abonné à au moins un groupe de diffusion recevant ledit flux de données, et étant connecté audit premier réseau par l'intermédiaire dudit premier routeur (15),
**caractérisé en ce que** ledit deuxième routeur comprend :
- des moyens de détection (11) d'une arrivée dudit terminal dans ledit deuxième réseau ;
- des moyens de demande de lecture (12) dans une table d'abonnement (18, 181), d'informations relatives à au moins un groupe de diffusion auquel ledit terminal est abonné ; et
- des moyens de réception (13) dudit flux de données à partir des informations lues, et de re-transmission audit terminal.

10. Routeur d'accès à un deuxième réseau, apte à recevoir un flux de données transféré d'un premier réseau,
un terminal étant abonné à au moins un groupe de diffusion recevant ledit flux de données, et étant connecté audit premier réseau par l'intermédiaire d'un routeur d'accès au premier réseau, dit premier routeur (15),
**caractérisé en ce que** ledit routeur d'accès au deuxième réseau comprend :
- des moyens de détection (11) d'une arrivée dudit terminal dans ledit deuxième réseau ;
- des moyens de demande de lecture (12) dans une table d'abonnement (18, 181), d'informations relatives à au moins un groupe de diffusion auquel ledit terminal est abonné ; et
- des moyens de réception (13) dudit flux de données à partir des informations lues et de re-transmission audit terminal.

11. Programme d'ordinateur **caractérisé en ce qu'**il comprend des instructions de code de programme pour la mise en oeuvre du procédé de gestion selon la revendication 1, lorsque ce programme est exécuté par un processeur.

## Patentansprüche

1. Verfahren zur Verwaltung einer Übertragung eines von einem mobilen Endgerät empfangenen Datenstroms von einem ersten Netz zu einem zweiten Netz,
wobei das Endgerät bei mindestens einer den Datenstrom empfangenden Verteilergruppe abonniert und mit dem ersten Netz über einen Zugangsrouter zum ersten Netz, erster Router (15) genannt, verbunden ist,
**dadurch gekennzeichnet, dass** das Verfahren von einem Zugangsrouter zum zweiten Netz, zweiter Router (16) genannt, durchgeführt wird und die folgenden Schritte durchführt:
- Erfassung (11) einer Ankunft des Endgeräts im zweiten Netz;
- Leseanforderung (12), in einer Abonnementtabelle (18, 181), von Informationen bezüglich mindestens einer Verteilergruppe, bei der das Endgerät abonniert ist;
- Empfang (13) des Datenstroms ausgehend von den gelesenen Informationen und Weiterleitung an das Endgerät.

2. Verwaltungsverfahren nach Anspruch 1, **dadurch gekennzeichnet, dass** es einen Schritt des Hinzufügens des zweiten Routers (16) zu einem Verteilerbaum für die den Datenstrom empfangende Verteilergruppe enthält, und dass der Empfangsschritt (13) durchgeführt wird, so lange der zweite Router (16) nicht zum Verteilerbaum gehört.

3. Verwaltungsverfahren nach Anspruch 1, **dadurch gekennzeichnet, dass** die Abonnementtabelle für ein Endgerät alle Verteilergruppen anzeigt, bei denen das Endgerät abonniert ist, und dass das Lesen vom zweiten Router (16) durchgeführt wird.

4. Verwaltungsverfahren nach Anspruch 3, **dadurch gekennzeichnet, dass** der zweite Router (16) eine Übertragungsanforderung des Datenstroms an einen dem ersten und dem zweiten Netz gemeinsamen Router sendet und den vom gemeinsamen Router kommenden Datenstrom empfängt.

5. Verwaltungsverfahren nach Anspruch 1, **dadurch gekennzeichnet, dass** die Abonnementtabelle dem ersten Router (15) zugeordnet ist und für ein mit dem ersten Netz verbundenes Endgerät alle Verteilergruppen anzeigt, bei denen das Endgerät abonniert ist,
und dass das Lesen vom ersten Router (15) durchgeführt wird.

6. Verwaltungsverfahren nach Anspruch 5, **dadurch gekennzeichnet, dass** der zweite Router (16) eine Übertragungsanforderung des Datenstroms an den ersten Router (15) sendet und den vom ersten Router (15) kommenden Datenstrom empfängt.

7. Verwaltungsverfahren nach Anspruch 5, **dadurch gekennzeichnet, dass** eine Abonnementtabelle ebenfalls dem zweiten Router (16) zugeordnet ist, wobei die Abonnementtabelle für ein mit dem zweiten Netz verbundenes Endgerät alle Verteilergruppen anzeigt, bei denen das Endgerät abonniert ist.

8. Verwaltungsverfahren nach Anspruch 1, **dadurch gekennzeichnet, dass** die Abonnementtabelle periodisch und/oder abhängig von einer Änderung der Abonnements des Endgeräts aktualisiert wird.

9. System zur Verwaltung einer Übertragung eines von einem mobilen Endgerät empfangenen Datenstroms von einem ersten Netz zu einem zweiten Netz,
wobei das System enthält:
- einen Zugangsrouter zum ersten Netz, erster Router (15) genannt;
- einen Zugangsrouter zum zweiten Netz, zweiter Router (16) genannt;
wobei das Endgerät bei mindestens einer den Datenstrom empfangenden Verteilergruppe abonniert und mit dem ersten Netz über den ersten Router (15) verbunden ist,
**dadurch gekennzeichnet, dass** der zweite Router enthält:
- Erfassungseinrichtungen (11) einer Ankunft des Endgeräts im zweiten Netz;
- Leseanforderungseinrichtungen (12), in einer Abonnementtabelle (18, 181), von Informationen bezüglich mindestens einer Verteilergruppe, bei der das Endgerät abonniert ist; und
- Einrichtungen (13) zum Empfang des Datenstroms ausgehend von den gelesenen Informationen und zur Weiterleitung an das Endgerät.

10. Zugangsrouter zu einem zweiten Netz, das einen von einem ersten Netz übertragenen Datenstrom empfangen kann,
wobei ein Endgerät bei mindestens einer den Datenstrom empfangenden Verteilergruppe abonniert und mit dem ersten Netz über einen Zugangsrouter zum ersten Netz, erster Router (15) genannt, verbunden ist,
**dadurch gekennzeichnet, dass** der Zugangsrouter zum zweiten Netz enthält:
- Erfassungseinrichtungen (11) einer Ankunft des Endgeräts im zweiten Netz;
- Leseanforderungseinrichtungen (12), in einer Abonnementtabelle (18, 181), von Informationen bezüglich mindestens einer Verteilergruppe, bei der das Endgerät abonniert ist; und
- Einrichtungen (13) zum Empfang des Datenstroms ausgehend von den gelesenen Informationen und zur Weiterleitung zum Endgerät.

11. Computerprogramm, **dadurch gekennzeichnet, dass** es Programmcodeanweisungen für die Durchführung des Verwaltungsverfahrens nach Anspruch 1 enthält, wenn dieses Programm von einem Prozessor ausgeführt wird.

## Claims

1. Method for managing a transfer of a data stream received by a mobile terminal from a first network to a second network,
said terminal having subscribed to at least one broadcasting group receiving said data stream, and being connected to said first network by way of an access router for the first network, termed the first router (15),
**characterized in that** said method is implemented by an access router for the second network, termed the second router (16), and implements the following steps:
- detection (11) of an arrival of said terminal in said second network;
- requesting reading (12), in a subscription table (18, 181), of information relating to at least one broadcasting group to which said terminal has subscribed;
- reception (13) of said data stream, on the basis of said information read, and retransmission to said terminal.

2. Management method according to Claim 1, **characterized in that** it comprises a step of adding said second router (16) to a broadcasting tree for the broadcasting group receiving said data stream, and **in that** said reception step (13) is implemented as long as said second router (16) does not belong to said broadcasting tree.

3. Management method according to Claim 1, **characterized in that** said subscription table indicates, for a terminal, all the broadcasting group to which said terminal has subscribed, and **in that** said reading is implemented by said second router (16).

4. Management method according to Claim 3, **characterized in that** said second router (16) sends a request to transmit said data stream destined for a router common to said first and second networks, and receives said data stream originating from said common router.

5. Management method according to Claim 1, **characterized in that** said subscription table is associated with said first router (15) and indicates, for a terminal connected to said first network, all the broadcasting group to which said terminal has subscribed,
and **in that** said reading is implemented by said first router (15).

6. Management method according to Claim 5, **characterized in that** said second router (16) sends a request to transmit said data stream to said first router (15) and receives said data stream originating from said first router (15).

7. Management method according to Claim 5, **characterized in that** a subscription table is also associated with said second router (16), said subscription table indicating, for a terminal connected to said second network, all the broadcasting groups to which said terminal has subscribed.

8. Management method according to Claim 1, **characterized in that** said subscription table is updated periodically and/or as a function of a modification of the subscriptions of said terminal.

9. System for managing a transfer of a data stream received by a mobile terminal from a first network to a second network, said system comprising:
- an access router for said first network, termed the first router (15);
- an access router for said second network, termed the second router (16);
said terminal having subscribed to at least one broadcasting group receiving said data stream, and being connected to said first network by way of said first router (15),
**characterized in that** said second router comprises:
- means (11) for detecting an arrival of said terminal in said second network;
- means (12) for requesting reading, in a subscription table (18, 181), of information relating to at least one broadcasting group to which said terminal has subscribed; and
- means (13) for receiving said data stream on the basis of the information read, and for retransmission to said terminal.

10. Access router for a second network, able to receive a data stream transferred from a first network,
a terminal having subscribed to at least one broadcasting group receiving said data stream, and being connected to said first network by way of an access router for the first network, termed the first router (15),
**characterized in that** said access router for the second network comprises:
- means (11) for detecting an arrival of said terminal in said second network;
- means (12) for requesting reading, in a subscription table (18, 181), of information relating to at least one broadcasting group to which said terminal has subscribed; and
- means (13) for receiving said data stream on the basis of the information read and for retransmission to said terminal.

11. Computer program **characterized in that** it comprises program code instructions for the implementation of the management method according to Claim 1, when this program is executed by a processor.
